# EUROPÄISCHE PATENTANMELDUNG

(11) **EP 4 242 273 A1**
(43) Veröffentlichungstag der Anmeldung: **13.09.2023**
(21) Anmeldenummer: 22211676.6
(22) Anmeldetag: 06.12.2022
(51) Int. Cl.: C09D 5/02, C09D 7/45, C09D 7/65, C09D 125/04, C09D 131/04, C09D 133/04

(54) **TÖN-BASIS FÜR BESCHICHTUNGSMASSEN**

(30) Priorität: 07.03.2022 DE 102022000788
(71) Anmelder: STO SE & Co. KGaA, 79780 Stühlingen (DE)
(72) Erfinder: Van Leeuwen, Jack, 4800 Zofingen (CH); Graunke, Volker, 79879 Wutach (DE); Färber, Alexander, 79879 Wutach (DE)
(74) Vertreter: Gottschalk, Matthias

(57) **Zusammenfassung**

Tön-Basis zur Herstellung von Fassadenfarben, umfassend wenigstens ein organisches Bindemittel, wenigstens ein Netz- und Dispergiermittel, im Wesentlichen ohne Zugabe von Pyro- oder Polyphospaten, insbesondere Tetrakaliumpyrophosphat oder Natriumpolyphosphaten; wenigstens ein Silikonöl; ggf. wenigstens einen Füllstoff und weitere Additive, Wasser zur Einstellung der Konsistenz.

## Beschreibung

Die Erfindung betrifft eine Tön-Basis für Beschichtungsmassen und auf dieser beruhende Fassadenfarben, insbesondere in dunklen oder intensiven Farbtönen.

Polymergebundene Beschichtungen werden gerne oberflächig im Außenbereich z. B. an Bauwerken und dgl. eingesetzt, wo sie verstärkt der Witterung und anderen Einflüssen ausgesetzt sind. Dadurch kann die Qualität, besonders das Aussehen, der Beschichtung beeinträchtigt werden.

Polymergebundene Fassadenfarben, besonders solche in dunklen oder intensiven Farbtönen, neigen oft zu Glanzstreifenbildung, die häufig auch als "Schneckenspuren" bezeichnet werden. Diese Glanzstreifenbildung sind auf Auswaschungen von wasserlöslichen Substanzen wie Emulgatoren, Netz-/Dispergiermitteln, Tensiden und ähnlichen oberflächenaktiven Substanzen aus dem Beschichtungsfilm zurückzuführen. Generell handelt es sich dabei um oberflächenaktive Substanzen (nachfolgend zusammen als "oaS" bezeichnet). Diese Substanzen verbleiben an der getrockneten Farboberfläche als feine, helle, fast transparente, teils klebrige Ablagerungen, die an eine getrocknete Schneckenspur aus Schneckenschleim erinnern, Sie beeinträchtigen dadurch das Aussehen der Fassade und sollen daher verringert werden.

In der Fachwelt ist der Begriff "Schneckenspuren" geläufig, wie es der Artikel aus Farbe & Lack //03.2021 "Mühe, gut auszusehen" zeigt. Dort werden auch Lösungsansätze zur Behebung der Problematik genannt. In diesem Artikel wird vorgeschlagen, den Gehalt an kritischen oberflächenaktiven Substanzen vor allem bei dunklen und intensiven Farbtönen soweit wie möglich zu verringern, soweit kein Qualitätsverlust zu erwarten ist. Ein vollständiger Verzicht ist bei polymergebundenen Kunstharz-Farben generell nicht möglich.

Unter Qualitätsverlust versteht man in diesem Zusammenhang beispielsweise ungenügende Lagerstabilität, Viskositätsänderungen, Agglomeratbildung, Absetzverhalten, Serumbildung, Aufschwimmen von Bestandteilen, Benetzungsprobleme, Farbtonveränderungen und / oder mangelnde Aufrührbarkeit.

Es gehört zu den wichtigen Aufgaben der Erfindung, die Probleme der Glanzstreifenbildung zu verringern oder ganz zu vermeiden.

Die Erfindung soll wahlweise in der Beschichtung (z. B. der Fassadenfarbe) oder einem Basis-Erzeugnis (z. B. einer Tön-Basis für Fassadenfarbe) realisiert werden können.

Eine Tön-Basis im Sinne der Erfindung ist eine noch nicht gebrauchsfertige Beschichtungsmasse, zu der noch Pigmente (meist in Form von Farbpigmentpasten) zugegeben werden, um eine gebrauchsfertige Beschichtungsmasse (speziell eine Fassadenfarbe) mit entsprechender Farbigkeit zu erhalten

Es ist daher u. a. eine speziellere Aufgabe der Erfindung, eine Tön-Basis für Fassadenfarben zur Verfügung zu stellen, die für die Herstellung einer weniger zur Ausbildung solcher Auswaschungen bzw. "Schneckenspuren" neigenden Fassadenfarbe geeignet ist.

Die Bereitstellung einer solchen Fassadenfarbe gehört ebenfalls zu den Aufgaben der Erfindung.

Tön-Basen bzw. daraus fertiggestellte Fassadenfarben enthalten in der Regel Bindemittel, Wasser und/oder Lösemittel, Füllstoffe, Pigmente und Additive. Auch die hier beanspruchten erfindungsgemäßen Tön-Basen bzw. Fassadenfarben enthalten und umfassen solche Inhaltsstoffe.

Als Bindemittel werden in den erfindungsgemäßen Tön-Basen bevorzugt polymere organische Bindemittel in Form einer Polymerdispersion eingesetzt. Grundsätzlich kommen alle Polymerbindemittel in Betracht, die üblicherweise in Kunststoffdispersionsfarben eingesetzt werden. Exemplarisch seien als geeignete polymere organische Bindemittel auf Dispersionsbasis Vinylacetat/ Ethylen-Copolymere, Copolymere auf Basis von Vinylaromaten, insbesondere Styrol, und Acrylaten oder auf Basis von Reinacrylaten. Polymere organische Bindemittel auf Basis von Copolymeren aus Reinacrylaten sind vorliegend besonders bevorzugt. Reinacrylate umfassen Homo- und insbesondere Copolymere von (Meth)acrylaten, d.h. Acrylaten und/oder Methacrylaten, gegebenenfalls auch mit (Meth)acrylsäure, d.h. Acryl- und/oder Methacrylsäure, als Comonomerbausteine.

Das polymere organische Bindemittel wird in einer zweckmäßigen Ausgestaltung in Form einer wässrigen Bindemitteldispersion eingesetzt. Demgemäß kommen als polymere organische Bindemittel insbesondere auch solche in Frage, bei denen die in Wasser dispergierten oder dispergierbaren Polymere aus gleichen oder verschiedenen Monomeren gebildet sind, wobei mindestens eines der Monomere ein Acrylsäureester, Methacrylsäurester, Acrylsäure, Methacrylsäure, Vinylacetat, Vinylchlorid, Versatat, Acrylnitril oder eine vinylaromatische Verbindung darstellt. In einer zweckmäßigen Ausgestaltung basiert das in Wasser dispergierte oder dispergierbare Polymer dabei auf i) Acrylsäureestern und Vinylaromaten, insbesondere Styrol, oder auf ii) Acrylsäureestern und Vinylestern mindestens einer Koch-Säure (tertiäre gesättigte Monocarbonsäure), insbesondere der Versatinsäure, und gegebenenfalls Vinylaromaten, insbesondere Styrol.

Der Trockengewichtsanteil an wenigstens einem organischen Polymerbindemittel in den erfindungsgemäßen Tön-Basen liegt bevorzugt im Bereich von 5 bis 50 Gew.%, vorzugsweise 10 bis 40 Gew.% und besonders bevorzugt von 12 bis 25 Gew. %, bezogen auf das Gesamtgewicht der verarbeitungsfertigen Tön-Basis.

Erfindungsgemäße Tön-Basen verfügen ferner über mindestens einen Füllstoff. Geeignete Füllstoffe umfassen dabei zum Beispiel Tonminerale; Talk; Glimmer; calcitische Füllstoffe, insbesondere Carbonate wie Calciumcarbonate, Dolomite, Calcite und/oder Aragonite; silikatische Füllstoffe, insbesondere Quarzite, Schichtsilikate, Feldspate und/oder Vulkanite; sulfatische oder oxidische Füllstoffe, insbesondere Bariumsulfat; und chemisch modifizierte Füllstoffe oder beliebige Gemische hiervon.

Bezogen auf das Gesamtgewicht der erfindungsgemäßen Zusammensetzungen, insbesondere Tön-Basen, liegen darin bevorzugt 10 bis 60 Gew. %, bevorzugt 20 bis 55 Gew.% und besonders bevorzugt 25 bis 50 Gew.% an Füllstoffen, insbesondere calcitischen und/oder silikatischen Füllstoffen, vor.

Die erfindungsgemäßen Tön-Basen enthalten gegebenenfalls ferner nur bis zu maximal 8,0 Gew.%, vorzugsweise bis zu maximal 5,0 Gew.% der Zusammensetzung an weiteren Additiven, z.B. rheologische Additive, Verdicker, Topf- und Filmkonservierungsmittel, Filmbindehilfsmittel, Biozide, Entschäumer, UV-Schutzmittel, Fasern, etc..

Inhaltsstoffe von Tön-Basen bzw. Fassadenfarben wie Füllstoffe, Pigmente oder die Partikel der Polymerdispersion müssen dispergiert und stabilisiert werden, um keine Qualitätseinbußen zu erleiden. Deshalb müssen einer Tön-Basis oder Fassadenfarbe immer oberflächenaktive Substanzen ("oaS") aktiv zugegeben werden. Neben dieser unvermeidbaren, aktiven Zugabe von oaS ist generell die Einschleusung oder Einschleppung von oaS durch dringend notwendige Additive unvermeidlich. Viele Additive wie Entschäumer, Rheologie-Additive, organische Mattierungsmittel, Hydrophobierungsmittel, Polymerdispersionen etc. enthalten Emulgatoren, Netz- oder Dispergiermittel oder andere oberflächenaktive Substanzen und diese oaS werden dadurch in Farbbeschichtungszusammensetzungen eingeschleust.

Die eingeschleusten Mengen an oaS sind nicht unerheblich und oft weitaus größer als die zur Dispergierung der Füllstoffe aktiv zugesetzte Menge beispielsweise an Netz- oder Dispergiermitteln.

Der größte Anteil an oaS wird durch Pigmentpräparationen und Pigmentpasten eingeschleppt. Pigmentpräparationen und Pigmentpasten enthalten bis 40 Gew.% (und oft noch mehr) Netz- u. Dispergiermittel oder ähnliche oaS (vgl. EP 3137559 oder DE102018004943A1). Die nachfolgende Diskussion fokussiert auf Pigmentpasten, da dies der weitaus größte Anteil von Pigmentpräparationen ist. Pigmentpasten werden in einer Größenordnung von 10 - 20 Gew.% den Tön-Basen zugesetzt, um die gewünschten intensiven Farbtöne zu realisieren

Ein größerer Anteil an oaS wird auch durch Hydrophobierungsmittel eingeschleppt. Hydrophobierungsmittel werden in Beschichtungsmitteln eingesetzt, um die Wasseraufnahme resp. Wasserdurchlässigkeit des Beschichtungsfilms zu reduzieren.

Hierbei kommen insbesondere Silikonharze und Polysiloxane, Fettsäuren und Fettsäurederivate sowie Wachse und Paraffine zum Einsatz. Dies sind hydrophobe Feststoffe, die mit oaS "wasserverträglich", d.h. wasserlöslich oder dispergierbar, gemacht werden müssen. Erfindungsgemäß wird zwischen Silikonharzen und Polysiloxanen im Sinne herkömmlicher Hydrophobierungsmittel und Silikonölen unterschieden, wie im Folgenden noch spezieller erläutert wird,

Wieviel an oaS in den marktüblichen Hydrophobierungsmitteln enthalten sind, ist nur dem Hersteller bekannt.

Ein Beispiel: Wachse werden als Mattierungs- oder Hydrophobierungsmittel eingesetzt, meist in Form einer Wachsemulsion. Wie es der Name schon sagt, können Wachse nur emulgiert werden, wenn Emulgatoren eingesetzt werden. Diese Emulgatoren führen dann ggf. wieder zu Schneckenspuren. Die Art und Menge der Emulgatoren gibt der Hersteller in der Regel nicht an.

Erfindungsgemäß werden vorzugsweise gar keine Wachse und andere Hydrophobierungsmittel eingesetzt, insbesondere werden solche Stoffe den erfindungsgemäßen Zusammensetzungen nicht aktiv, absichtlich zugegeben.

Dies betrifft auch Silikonharze und Polysiloxane, jedoch nicht Silikonöl, welches in erfindungsgemäßen Zusammensetzungen vorzugsweise eingesetzt wird.

Der Gehalt an Wachsen und anderen Hydrophobierungsmitteln ist daher möglichst gering, ganz besonders bevorzugt innerhalb der am Anmeldetag gegebenen Analysengrenzen praktisch oder sogar ganz gleich Null.

Schneckenspuren treten auch auf, weil die Wasseraufnahme der Farbbeschichtungen zu hoch ist. Je niedriger die Wasseraufnahme, desto niedriger ist die Tendenz zur Bildung von Schneckenspuren infolge von Auswaschungen oberflächenaktiver Substanzen. Ein Teilziel ist es deshalb, die Wasseraufnahme zu reduzieren.

Die Wasseraufnahme wird beispielsweise durch die Zugabe von Hydrophobierungsmitteln verringert, was aber dazu führen kann, dass neue oaS in erheblichen Mengen einschleppt werden.

Die Darstellung von dunklen oder intensiven Farbtönen auf Basis polymergebundener Kunstharzbeschichtungen ist marktüblich. Daher werden die vorstehend genannten Probleme durchgängig von den Herstellern von Fassadenfarben angetroffen.

Zur Lösung dieser Probleme wurde schon versucht, neue Netz- und Dispergiermittel zu entwickeln, die effektiver und auswaschungsstabiler sind, wie beispielsweise in der DE102019210457A1 beschrieben. Pigmentpasten mit verbesserten Netz- und Dispergiermitteln sind in der DE19822603A1 offenbart.

Trotz solcher Bemühungen um verbesserte Formulierungen treten "Schneckenspuren" bei den bekannten Fassadenfarben nach wie vor in störenden Ausmaßen auf.

Die Erfindung ist geeignet, diese Probleme wenigstens teilweise zu überwinden. Sie erreicht dies wesentlich durch Vermeidung oder zumindest die Verringerung dieser Schneckenspuren (Auswaschungen oberflächenaktiver Substanzen) und Verringerung der Wasseraufnahme des Farbbeschichtungsfilms durch
- Reduzierung des Gehalts an oberflächenaktiven Substanzen und
- Reduzierung der Wasseraufnahme der Beschichtung durch die Verwendung von geeigneten hydrophoben Substanzen.

Die erfindungsgemäße Lösung des Problems beruht im Grundsatz auf drei Maßnahmen mit aufsteigender Wichtigkeit:
1. Eliminierung von besonders ,kritischen' Netz- und Dispergiermitteln, insbesondere keine aktive Zugaben der häufig verwendeten Pyro- und Polyphosphate wie beispielsweise Tetrakaliumpyrophosphat oder Natriumpolyphosphate;
2. Reduzierung des Gesamtgehalts an oberflächenaktiven Substanzen, insbesondere durch Verwendung von besonders effektiven Netzmitteln, Optimierung der Netzmittelzusammensetzung, (insbesondere durch die Verwendung von Polyacrylat-Netzmittel);
3. Zugabe von Silikonölen. Dabei ist zu beachten, dass im Kontext der Erfindung unter "Silikonölen" speziell die im Folgenden noch näher definierten Substanzen verstanden werden.

1. Pyro- und Polyphosphate (allgemein "Phosphate") werden häufig als effektive und kostengünstige Netz- und Dispergiermittel eingesetzt, können aber relativ leicht ausgewaschen werden.

Die üblichen Gehalte an Phosphaten lagen bis zu 1,0 Gew.% bezogen auf die verarbeitungsfertige Fassadenfarbe oder Tön-Basis, in der Regel aber zwischen 0,1 und 0,5 Gew.%.

Auf diese Phosphate wird erfindungsgemäß im Wesentlichen verzichtet bzw. sie werden durch andere Netz- und Dispergiermittel ersetzt. "Im Wesentlichen verzichtet" heißt hier, dass kein Phosphate bewusst zugesetzt wird und/oder der Gehalt an Pyrophosphat unter 0,01 Gew.% liegt.

Alternative Netz- und Dispergiermittel (statt Phosphate) sind dabei beispielsweise Salze von Polyacrylsäuren oder allgemein Polyacrylat-Netzmittel. Die Polyacrylate können dabei mehr oder weniger modifiziert vorliegen. Polyacrylat-Netzmittel sind kommerziell erhältlich und im Stand-der-Technik ebenfalls schon lange bekannt.

2. Die üblichen Gehalte an Polyacrylat-Netzmitteln lagen im Stand der Technik bei bis zu 1,0 Gew.% Wirkstoff bezogen auf die verarbeitungsfertige Fassadenfarbe oder Tön-Basis, in der Regel aber zwischen 0,1 und 0,5 Gew.%.

In erfindungsgemäßen Beschichtungszusammensetzungen ist dagegen der Gehalt an Netz- und Dispergiermitteln (Polyacrylate) stark reduziert. Er beträgt weniger als 0,4 Gew.% Wirkstoff, bevorzugt zwischen 0,01 Gew.% und 0,2 Gew.%, noch bevorzugter 0,01 Gew.% und 0,1 Gew.% Wirkstoff, bezogen auf das Gesamtgewicht der verarbeitungsfertigen Tön-Basis.

3. Die oaS können aus einem getrocknetem Farbfilm nur ausgewaschen werden, wenn Wasser an ihnen "angreifen" kann. Ein Angriff kann nur erfolgen, wenn der Farbfilm eine gewisse Menge an Wasser aufnimmt.

Schneckenspuren treten typischerweise durch Feuchtebelastung infolge von Regen, Nebel oder Tau in den ersten Tagen und Wochen der Bewitterung auf. Die Auswaschbarkeit der oaS, die bedingt ist durch eine relativ hohe Wasseraufnahme des Beschichtungsfilms im Falle des Kontakts mit Wasser, wird deshalb weiter verringert durch die Steigerung der Hydrophobie des Beschichtungsfilms. Wasserabweisende Beschichtungsfilme nehmen weniger Wasser auf. Herkömmliche Hydrophobierungsmittel sind beispielsweise Silikonharze und Polysiloxane, Fettsäuren und Fettsäurederivate sowie Wachse und / oder Paraffine. Üblicherweise werden diese als Dispersionen oder Emulsionen eingesetzt. Um diese Wirksubstanzen dispergieren/emulgieren zu können bzw. deren Zweiphasengemische stabilisieren zu können, benötigt man wiederum oberflächenaktive Substanzen, welche sich kontraproduktiv auswirken können.

Daher wird erfindungsgemäß als Hydrophobierungsmittel kein Silikonharz oder Polysiloxan, sondern ein Silikonöl eingesetzt.

Bevorzugt ist das erfindungsgemäß eingesetzte Silikonöl keine Emulsion bzw. Dispersion, sondern ein reiner Wirkstoff oder eine Lösung aus (organischem) Lösemittel und Wirkstoff ohne weitere oberflächenaktiven Substanzen.

Dies ist ein besonders wichtiger Aspekt der Erfindung. Es kommt daher wesentlich darauf an, die erfindungsgemäß einzusetzenden Silikonöle zu unterscheiden von Silikonharzen und Polysiloxanen im Allgemeinen. Diese Silikonharze und Polysiloxane sind aufgebaut aus mono-, di-, tri- und quartärfunktionale Einheiten und können zu zwei- oder dreidimensionalen Strukturen vernetzen. Sie werden gerade deshalb als Bindemittel und Hydrophobierungsmittel eingesetzt.

Silikonöle sind keine gebräuchlichen Hydrophobierungsmittel. Sie werden gelegentlich mit flüssigen Silikonharzen in einen Topf geworfen oder verwechselt. Silikonöle sind immer linear (in seltenen Fällen cyclisch) aufgebaut, ausschließlich aus mono- und difunktionalen Einheiten. Sie enthalten keine tri- oder quartärfunktionale Einheiten wie die Silikonharze und können deshalb nicht über Si-O-Si - Brücken vernetzen. Silikonöle sind, wie es die Bezeichnung "Öl" schon besagt, bei 20°C/1 bar flüssig bis zähflüssig.

Die Seitengruppen der erfindungsgemäß verwendeten Silikonöle sind weitgehend unpolarer Natur, beispielsweise Hydrocarbyl-Gruppen, können aber vereinzelt reaktive Gruppen (beispielsweise alkylierte Aminogruppen) tragen. Vorzugsweise enthält das Silikonöl hauptsächlich Hydrocarbylseitenketten, z.B. C₁ bis C₂₀ Hydrocarbylseitenketten, noch bevorzugter hauptsächlich Alkylseitenketten, z.B. C₁ bis C₂₀ Alkylseitenketten. Durch die Abwesenheit von polaren Seitenketten weist das Silikonöl stark unpolaren Charakter auf. Normalerweise enthalten die Alkylketten nicht mehr als 5 Kohlenstoffatome. Verzweigte und lineare Polysiloxane mit methyl-, ethyl- oder propyl-Seitenketten sind besonders bevorzugt.

"Hauptsächlich unpolare Seitenketten" bedeutet in der vorliegenden Anmeldung, dass bei der Synthese der Silikonöle keine polaren Seitenketten absichtlich eingeführt werden. "Hauptsächlich Hydrocarbylseitenketten" bedeutet in der vorliegenden Anmeldung, dass bei der Synthese der Silikonöle keine Seitenketten außer Hydrocarbylseitenketten absichtlich eingeführt werden.

"Hauptsächlich Alkylseitenketten" bedeutet in der vorliegenden Anmeldung, dass bei der Synthese der Silikonöle keine Seitenketten außer Alkylseitenketten absichtlich eingeführt werden. Die Alkylseitenketten können ihrerseits aber vereinzelt reaktive Gruppen (beispielsweise alkylierte Aminogruppen) tragen. Diese reaktive Gruppen sind aber nicht in der Lage, zu einer zwei- oder dreidimensionalen Vernetzung des Silikonöls zu führen; d.h. diese Gruppen sind reaktiv, aber nicht vernetzend.

Analoges gilt für C₁ bis C₂₀ Hydrocarbylseitenketten und C₁ bis C₂₀ Alkylseitenketten.

In einer bevorzugten Ausführungsform enthält das Silikonöl ausschließlich Hydrocarbylseitenketten, noch bevorzugter ausschließlich Alkylseitenketten gemäß einer der o.g. Ausführungsformen.

Das Silikonöl weist vorzugsweise keine Alkoxyseitenketten auf. Die Abwesenheit von Alkoxyseitenketten kann durch Abwesenheit der symmetrischen Si-O-C-Streckschwingung im FTIR-Spektrum (940 bis 970 cm⁻¹) festgestellt werden. Vorzugsweise weist das Silikonöl ein Molekulargewicht von 1000 bis 20000 g/mol auf, stärker bevorzugt sind 4000 bis 10000 g/mol.

Das Silikonöl weist vorzugsweise bei 25°C eine Viskosität von 20 bis 200mPa^{∗}s auf, stärker bevorzugt sind 25 bis 160mPa^{∗}s., noch bevorzugter 30 bis 140mPa^{∗}s. Die Messung der Viskosität erfolgt beispielsweise mit einem Rotationsrheometer Anton Paar Rheolab QC.

Vorzugsweise enthält die Zusammensetzung nur Silikonöle, die die o.g. Eigenschaften in deren bevorzugten Ausführungsformen aufweisen.

Die Menge des Silikonöls in einer erfindungsgemäßen Tön-Basis beträgt vorzugsweise 0,1 bis 2,0 Gew.%, stärker bevorzugt sind 0,1 bis 1,5 Gew.%, noch stärker bevorzugt sind 0,2 bis 0,8 Gew.%, bezogen auf das Gesamtgewicht der verarbeitungsfertigen Tön-Basis.

Entschäumer auf Silikonöl-Basis gehören nicht zu den erfindungsgemäß eingesetzten Silikonölen. Sie sind vielmehr Reaktionsprodukte oder Zusammensetzungen mit (amorphen) Kieselsäuren. Entschäumer bestehen aus oder enthalten oberflächenaktive Substanzen. Sie sind per se oberflächenaktiv und können deshalb keine hydrophobierende Wirkung aufweisen. Davon sind die erfindungsgemäß eingesetzten Silikonöle zu unterscheiden, die eben keine Oberflächenaktivität aufweisen.

Es sind auch Entschäumer erhältlich, die Silikonöl in geringen Mengen enthalten. Beispielhaft sei hier das Produkt "Agitan 218" der Fa. Münzing erwähnt. Aufgrund der Oberflächenaktivität haben solche Entschäumer keine hydrophobierenden Eigenschaften und sind nicht als erfindungsgemäß eingesetzte Silikonöle anzusehen.

Zu den die Erfindung weiter verbessernden Maßnahme gehört die ein möglichst geringer Gehalt der Tön-Basis und der daraus erzeugbaren Farben an anderen üblich verwendeten Hydrophobierungsmittel wie Silikonharzen und Polysiloxanen, Fettsäuren und Fettsäurederivaten sowie Wachsen und Paraffinen. Auf diese Hydrophobierungsmittel wird erfindungsgemäß im Wesentlichen verzichtet. "Im Wesentlichen verzichtet" heißt hier, dass keine derartigen Hydrophobierungsmittel bewusst zugesetzt werden und/oder der Gehalt an unter 0,1 Gew.%, besser unter 0,01 Gew.% liegt.

Besonders bevorzugt sind die erfindungsgemäße Tön-Basis und die daraus erzeugbaren Farben innerhalb der am Anmeldetag geltenden Analysegenauigkeit vorzugsweise völlig frei von solchen Hydrophobierungsmitteln.

Zu den Vorteilen der Erfindung gehört eine deutliche Verbesserung der Beständigkeit im Vergleich zu herkömmlich formulierten Kunstharz-Fassadenfarben. Schneckenspuren werden weitgehend oder ganz vermieden, auch bei Verwendung der schon bekannten Farbpigmentpasten, d. h. die "alten", marktverfügbaren Pigmentpasten können weiterverwendet werden.

Vorzugsweise hat eine erfindungsgemäße Tön-Basis folgende Zusammensetzung:

| | |
|---|---|
| Wasser / Lösemittel | 20 bis 50 Gew.% |
| Organisches Polymerbindemittel | 5,0 bis 50 Gew.% |
| Füllstoffe | 10 bis 60 Gew.% |
| Ggfs. weitere Additive (Verdicker, Entschäumer, Biozide, etc.) | max. 8,0 Gew. % |
| Silikonöl | 0,1 bis 2,0 Gew.% |
| Netz-/Dispergiermittel (auf Polyacrylat-Basis) | 0,01 bis 0,4 Gew.% |

Die bevorzugteren Bereiche der Inhaltsstoffe sind vorstehend in der ausführlichen Beschreibung der Erfindung angegeben.

### Beispielrezeptur für eine erfindungsgemässeTön-Basis:

| | Gew. % |
|---|---|
| Wasser | 33,0 |
| Polymeres Dispersionsbindemittel auf Acrylatbasis (Feststoffanteil) | 18,0 |
| Füllstoffe (Silikate, Carbonate) | 45,0 |
| weitere Additive (Verdicker, Entschäumer, Biozide, etc.) | 3,4 |
| Silikonöl | 0,5 |
| Netz-/Dispergiermittel (auf Polyacrylat-Basis) | 0,1 |
| | 100,0 |

Von dieser Tön-Basis werden beispielsweise 88 Gew. Teile mit 12 Gew. Teilen Pigmentpasten-Mischung versetzt, um eine Fassadenfarbe im gewünschten anthraziten Farbton zu erhalten. Die Pigmentpasten-Mischung besteht ihrerseits wieder aus vier Pigmentpasten, wobei die schwarze Pigmentpaste aus der Familie "Oxid Black" den größten Anteil der Mischung ausmacht.

Als Vergleichsbeispiel wird analog eine Fassadenfarbe genommen, die aus einer Tön-Basis hergestellt wird, die kein Silikonöl enthält und nicht hinsichtlich der Netz- und Dispergiermittel modifiziert wurde.

Die Neigung zur Schneckenspurbildung wird labortechnisch überprüft mittels der "Standard Practice to Evaluate Leaching of Water-Soluble Materials from Latex Paint Films" ASTM, D7190-10 (2011).

Die Neigung zur Schneckenspurbildung bzw. zum "Leaching" ist bei der erfindungsgemäßen Ausführung wesentlich geringer als beim Vergleichsbeispiel.

Die Wasseraufnahme zeigt sich ebenfalls verbessert. Die Wasseraufnahme wurde über die Ermittlung der Wasserdurchlässigkeit in Anlehnung an die DIN EN 1062-3 (April 2008) bestimmt. Allerdings wurden die Proben vor der Bestimmung der Wasseraufnahme, resp. Wasserdurchlässigkeit nicht vorkonditioniert, d.h. ohne dreimalige 24-stündige Lagerung in frischem Leitungswasser, wie es die Norm vorgibt, sondern direkt nach vollständiger normgemäßer Trocknung der Farbbeschichtung vermessen. Dadurch wurde der verfälschende Einfluss dieser mehrfachen Vorwaschung auf die Eluierung der oberflächenaktiven Substanzen vermieden. Die Wasseraufnahme bei Erstkontakt mit Wasser ist ja von besonderem Interesse.

Die erfindungsgemäße Fassadenfarbe weist für die Wasserdurchlässigkeit in der Dreifachbestimmung einen Durchschnittswert von 0,18 kg/(m² · h^{0,5}) auf, das Vergleichsbeispiel dagegen nur einen Wert von 0,40 kg/(m² · h^{0,5}). Die Wasseraufnahme hat sich deutlich verbessert.

## Patentansprüche

1. Tön-Basis zur Herstellung von Fassadenfarben, umfassend
wenigstens ein organisches Bindemittel
wenigstens ein Netz- und Dispergiermittel, im Wesentlichen ohne Zugabe von Pyro- oder Polyphospaten, insbesondere Tetrakaliumpyrophosphat oder Natriumpolyphosphaten; wenigstens ein Silikonöl;
ggf. wenigstens einen Füllstoff und weitere Additive,
Wasser zur Einstellung der Konsistenz.

2. Tön-Basis nach Anspruch 1, die als Bindemittel wenigstens ein polymeres organisches Bindemittel in Form einer Polymerdispersion enthält.

3. Tön-Basis nach Anspruch 2, umfassend wenigstens ein Bindemittel auf Dispersionsbasis, ausgewählt aus Vinylacetat/ Ethylen-Copolymeren, Copolymeren auf Basis von Vinylaromaten, insbesondere Styrol, und Acrylaten oder auf Basis von Reinacrylaten.

4. Tön-Basis nach Anspruch 2 oder 3, enthaltend wenigstens ein Bindemittel auf Basis von Copolymeren aus Reinacrylaten umfassend Homo- und insbesondere Copolymere von (Meth)acrylaten, d.h. Acrylaten und/oder Methacrylaten, gegebenenfalls auch mit (Meth)acrylsäure, d.h. Acryl- und/oder Methacrylsäure, als Comonomerbausteine.

5. Tön-Basis nach einem der vorstehenden Ansprüche, bei welcher der Trockengewichtsanteil an wenigstens einem organischen Polymerbindemittel im Bereich von 5 bis 50 Gew.%, vorzugsweise 10 bis 40 Gew.% und besonders bevorzugt von 12 bis 25 Gew.%, bezogen auf das Gesamtgewicht der verarbeitungsfertigen Tön-Basis, liegt.

6. Tön-Basis nach einem der vorstehenden Ansprüche, enthaltend wenigstens ein Netz- und Dispergiermittel auf Basis von Polyacrylaten, ggf. modifizierten Polyacrylaten.

7. Tön-Basis nach Anspruch 6, bei der der Gehalt an Netz- und Dispergiermitteln (insbesondere Polyacrylate) weniger als 0,4 Gew.% Wirkstoff, bevorzugt zwischen 0,01 Gew.% und 0,2 Gew.%, noch bevorzugter 0,01 Gew.% und 0,1 Gew.% Wirkstoff, (bezogen auf das Gesamtgewicht der verarbeitungsfertigen Tön-Basis) beträgt.

8. Tön-Basis nach einem der vorstehenden Ansprüche, bei der Gehalt an Pyrophosphat unter 0,01 Gew.%, (bezogen auf das Gesamtgewicht der verarbeitungsfertigen Tön-Basis) beträgt.

9. Tön-Basis nach einem der vorstehenden Ansprüche, umfassend wenigstens ein Silikonöl, das nicht als Emulsion bzw. Dispersion, sondern als reiner Wirkstoff oder als Lösung aus (organischem) Lösemittel und Wirkstoff ohne weitere oberflächenaktiven Substanzen vorliegt.

10. Tön-Basis nach Anspruch 9, bei welcher das Silikonöl bei 20°C/1 bar flüssig bis zähflüssig ist, vorzugsweise ein Molekulargewicht von 1000 bis 20 000 g/mol, spezieller von 4000 bis 10 000 g/mol und vorzugsweise unpolare Seitengruppen, insbesondere C1 bis C 20-Alkylseitenketten, aufweist und besonders bevorzugt Polysiloxane mit Methyl, Ethyl- und/oder Propyl-Seitenketten umfasst.

11. Tön-Basis nach einem der vorstehenden Ansprüche, die im Wesentlichen keine herkömmlichen Hydrophobierungsmittel, insbesondere keine Silikonharze und Polysiloxane, Fettsäuren und Fettsäurederivate sowie Wachse und Paraffine enthält

12. Tön-Basis nach einem der vorstehenden Ansprüche, bei welcher der Füllstoff ein Silikat und/oder Carbonat umfasst.

13. Tön-Basis nach einem der vorstehenden Ansprüche, umfassend
| | |
|---|---|
| Wasser / Lösemittel | 20 bis 50 Gew.% |
| Organisches Polymerbindemittel | 5,0 bis 50 Gew.% |
| Füllstoffe | 10 bis 60 Gew.% |
| Ggfs. weitere Additive (Verdicker, Entschäumer, Biozide, etc.) | max. 8,0 Gew. % |
| Silikonöl | 0,1 bis 2,0 Gew.% |
| Netz-/Dispergiermittel (auf Polyacrylat-Basis) | 0,01 bis 0,4 Gew.% |

14. Oberflächenbeschichtung, insbesondere Fassadenfarbe, erhältlich, insbesondere erhalten, durch Verwendung einer Tön-Basis gemäß einem der Ansprüche 1 bis 13.

15. Oberflächenbeschichtung gemäß Anspruch 14, erhältlich oder erhalten durch Vermischen einer Tön-Basis mit einer Pigment-Paste.
